(19) **Europäisches Patentamt**

**European Patent Office**

**Office européen des brevets**

(11) **EP 1 312 954 B1**

(12) **EUROPEAN PATENT SPECIFICATION**

(45) Date of publication and mention
of the grant of the patent:
**01.03.2006 Bulletin 2006/09**

(51) Int Cl.:
***G02B 6/38*** (2006.01)

(21) Application number: **01309628.4**

(22) Date of filing: **15.11.2001**

(54) **Fiber optic connector ferrule**

Faseroptischer Steckerstift

Virole d'un connecteur à fibre optique

(84) Designated Contracting States:
**AT BE CH CY DE DK ES FI FR GB GR IE IT LI LU MC NL PT SE TR**

(43) Date of publication of application:
**21.05.2003 Bulletin 2003/21**

(73) Proprietors:
• **FURUKAWA ELECTRIC CO., LTD.**
**Tokyo 100-8322 (JP)**
• **TYCO Electronics Corporation**
**Middletown, Pennsylvania 17057 (US)**

(72) Inventors:
• **Hengelmolen, Arie**
**5346 KB Oss (NL)**
• **Bakel, Rene van**
**5348 JZ Oss (NL)**
• **Geffen, Sjoerd van**
**5467 BP Veghel (NL)**
• **Arts, Ko**
**5831 GG Boxmeer (NL)**
• **Vermeulen, Wilfred**
**5473 EL Heeswijk-Dinther (NL)**
• **Gurreri, Mike**
**York, Pennsylvania 17404 (US)**
• **Eloise, Shurby**
**5253 BL Nieuw-Cuick (NL)**

• **Yamada, Hiroyuki, The Furukawa Electric Co. Ltd**
**Chiyoda-ko, Tokyo 100-8322 (JP)**
• **Scholten, Martijn**
**6662 XC Elst (NL)**
• **Hirao, Masahiro, The Furukawa Electric Co. Ltd**
**Chiyoda-ko, Tokyo 100-8322 (JP)**
• **Kamiko, Michiyasu**
**Ichibara, Chiba 290-8555 (JP)**

(74) Representative: **Warren, Keith Stanley et al**
**BARON & WARREN**
**19 South End**
**Kensington**
**London W8 5BU (GB)**

(56) References cited:
**EP-A- 1 061 390**     **CH-A- 687 105**
**DE-B- 2 516 662**     **US-A- 6 155 722**

• **PATENT ABSTRACTS OF JAPAN vol. 1997, no. 12, 25 December 1997 (1997-12-25) & JP 09 203825 A (FURUKAWA ELECTRIC CO LTD:THE), 5 August 1997 (1997-08-05)**
• **PATENT ABSTRACTS OF JAPAN vol. 013, no. 191 (P-867), 9 May 1989 (1989-05-09) & JP 01 017010 A (SUMITOMO ELECTRIC IND LTD), 20 January 1989 (1989-01-20)**

**Description**

The present invention relates to a ferrule for a multi-connector used for a connecting portion of optical fibers in optical communications and a connecting portion of optical modules such as optical semiconductors and, more particularly, to a ferrule for an MT connector.

A ferrule for a multi-connector, which is installed at the end of a plurality of optical fibers and is used for connection between the optical fibers, is molded using a thermosetting resin or a thermoplastic resin.

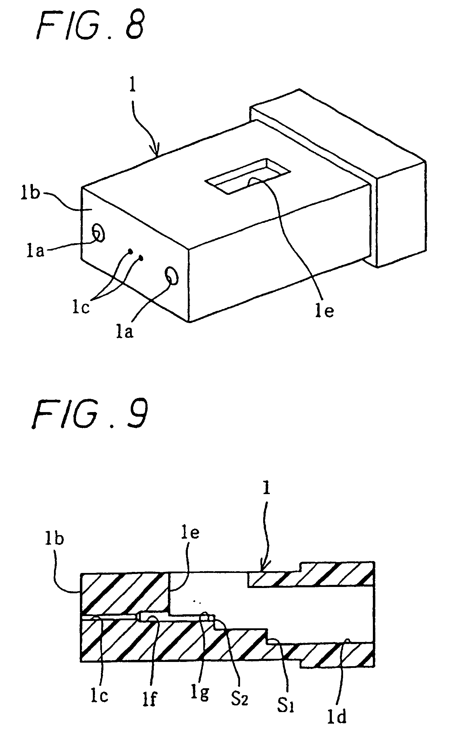

For example, a ferrule 1 shown in FIG. 8 is provided with two alignment pin holes 1a in which alignment pins for positioning with respect to another ferrule of the same construction are inserted, and two fiber holes 1c which are formed at a predetermined interval between the alignment pin holes 1a and are open to a ferrule end face 1b so that optical fibers are inserted therein. As shown in FIG. 9, the ferrule 1 is also provided with a boot insertion hole 1d which is open to a rear end face, and an adhesive agent inserting window 1e which is formed at a substantially central portion perpendicularly to the boot insertion hole 1d and is open to a top face of the ferrule 1. In this construction, the ferrule 1 is formed with a fiber guide hole 1f located between the fiber hole 1c and the adhesive agent inserting window 1e, and a U-sbaped groove 1g located adjacent to the fiber guide hole 1f.

therefore, the ferrule 1 is assembled into a multi-connector in the following way: An optical fiber, for example, an optical ribbon fiber with fibers separated is inserted through the boot insertion hole 1d, and the optical fibers are inserted into the fiber holes 1c through the U-shaped grooves 1g and the fiber guide holes 1f. Then, an adhesive agent is poured through the adhesive agent inserting window 1e to fix the optical fibers. The extending portion of the optical ribbon fiber is protected by a boot inserted into the rear part of the ferrule 1.

The conventional ferrule shown in FIGS. 8 and 9 is provided with step portions S1 and S2 at the substantially central portions of the boots insertion hole 1d. For this reason, the ferrule 1 has a problem in that when optical fibers are inserted into the fiber holes 1c through the boot insertion hole 1d, the U-shaped grooves 1g, and the fiber guide holes 1f to assemble an optical connector, the optical fiber is liable to abut on the step portions S1 and S2, so that the work efficiency is low, and in the worst case, the optical fiber is broken.

Another problem is that since the boot insertion hole 1d and the adhesive agent inserting window 1e occupy a large volume in the ferrule 1, the quantity of adhesive agent put in the ferrule 1 increases, resulting in variations in connection loss when the temperature varies.

EP-A-1061390 discloses a ferrule having a plurality of fiber fixed holes for optical fibers to be inserted into. Each of the fiber fixed holes has an optical fiber introducing hole for guiding the optical fiber, a minute hole connected to the optical fiber introducing hole for inserting the optical fiber, and a fiber ribbon insertion hole connected with the optical fiber introducing hole to receive the sheathed portion of a multiple-fiber optical fiber ribbon. A connecting portion of the optical fiber introducing hole and the fiber ribbon insertion hole is tapered. The fiber ribbon insertion hole forms a pool at its opening for an adhesive agent for fixing the optical fibers.

CH-A-687105 discloses a connector having cooperating plug and socket halves. Each half has a plurality of fiber fixed holes which each have a fiber insertion hole.

JP-A-9-203825 discloses a connector having adjoining parallel grooves for receiving sheathed portions of optical fibers.

DE-A-25 16 662 discloses a ferrule having a plurality of fiber fixed holes. Each fiber fixed hole has a fiber guide hole formed so that its diameter decreases from an adjoining fiber insertion hole at one end to an adjoining fiber hole at the opposite end.

JP-A-01-017010 discloses ferrules which each have a fiber insertion hole that forms a pool at its opening for receiving adhesive agents for fixing an optical cable terminal. Adhesive agents are sucked from the ferrules so that the adhesive agents are spread into all parts of the ferrules and the ferrules are inserted to the optical cable terminals.

The present invention has been made to solve the above problems, and accordingly an object thereof is to provide a ferrule which has a fiber fixed hole into which an optical fiber can be inserted easily without being broken and which can provide a sufficient fiber bonding strength, and which can restrain variations in connection loss caused by the temperature variations.

To achieve the above object, a ferrule is provided with two alignment pin holes into which alignment pins for positioning with respect to a mating ferrule are inserted, and a plurality of fiber fixed holes formed at predetermined locations along a transverse axis between said two alignment pin holes for inserting an optical fiber, in which each of said fiber fixed holes has at least a fiber guide hole for guiding the optical fiber, a fiber hole connected with said fiber guide hole to accommodate the tip end of the optical fiber, and a fiber insertion hole connected with said fiber guide hole to introduce a sheathed portion of the optical fiber into said ferrule, and a connecting portion of said fiber guide hole and said fiber insertion hole is formed into a taper shape, at least one of said fiber insertion holes having a pool for an adhesive agent formed at its opening for fixing the optical fiber, characterized in that the width of the opening portion of said adhesive agent pool in the direction perpendicular to said transverse axis is larger than the width of said opening portion in said transverse axis.

Since the tip end of the optical fiber is inserted from the fiber insertion hole into the fiber guide hole along the tapered portion without being resisted, the efficiency of work for inserting the fiber is increased, and also the breakage of the optical fiber is prevented.

Since the adhesive agent pool is formed, an adhesive agent can easily be poured. Also, even if the adhesive agent flows reversely in the fiber fixed hole at the time of optical fiber insertion, the adhesive agent does not flow out of the ferrule along the optical fiber.

In the invention an adhesive agent pool as large as possible is formed between the alignment pin holes at a limited interval while the thickness between the alignment pin holes and the adhesive agent pool is maintained sufficiently in terms of strength.

Also, variations in connection loss caused by the temperature variations in the application environment of the ferrule are prevented.

Each fiber can be inserted surely into a predetermined fiber insertion hole. Also, since the fiber insertion hole is formed separately, the aligning operation at the time of fiber insertion is excellent. If the fiber insertion hole is formed so as to have a substantially circular shape on the end face, more excellent aligning operation can be provided.

The fiber insertion hole may be formed as a common fiber insertion hole for introducing sheathed portions of a plurality of fibers, and the fiber insertion hole may be provided with movement regulating means for preventing movement of the sheathed portion along the transverse axis.

Since the movement regulating means is formed in the fiber insertion hole, the optical fiber can be inserted surely into a predetermined fiber insertion hole.

The movement regulating means may comprise a convex portion which extends into the fiber insertion hole, and the width of the fiber insertion hole at the convex portion in a direction perpendicular to the transverse axis is smaller than the diameter of a sheathed portion of the fiber.

Therefore, the sheathed portion inserted in the fiber insertion hole is surely prevented from moving unnecessarily in the transverse axis.

The fiber guide hole and the fiber insertion hole may be formed into a continuous taper shape.

Since the fiber guide hole and the fiber insertion hole are formed into a continuous taper shape, the tip end of the optical fiber can be inserted from the fiber insertion hole into the fiber guide hole along the tapered portion without being resisted. Therefore, the efficiency of work for inserting the fiber is increased, and also the breakage of the optical fiber is prevented.

Embodiments of the present invention will now be described, by way of example, with reference to the accompanying drawings, in which:-

FIG. 1 is a perspective view showing a first embodiment of a ferrule in accordance with the present invention;

FIG. 2 is a plan view (FIG. 2(a)) and a longitudinal sectional view (FIG. 2(b)) of the ferrule shown in FIG. 1;

FIG. 3 is a view taken in the direction of the arrows A of the ferrule shown in FIG. 1;

FIG. 4 is a longitudinal section view showing a state in which an optical fiber is inserted into the ferrule shown in FIG. 1;

FIG. 5 is a view corresponding to FIG. 3, showing a modification of the ferrule shown in FIG. 1;

FIG. 6 is a plan view (FIG. 6(a)) and a longitudinal sectional view (FIG. 6(b)) showing a ferrule not in accordance with the present invention;

FIG. 7 is a sectional plan view showing a modification of the ferrule of Fig 6;

FIG. 8 is a perspective view of a conventional ferrule; and

FIG. 9 is a longitudinal sectional view of the ferrule shown in FIG. 8.

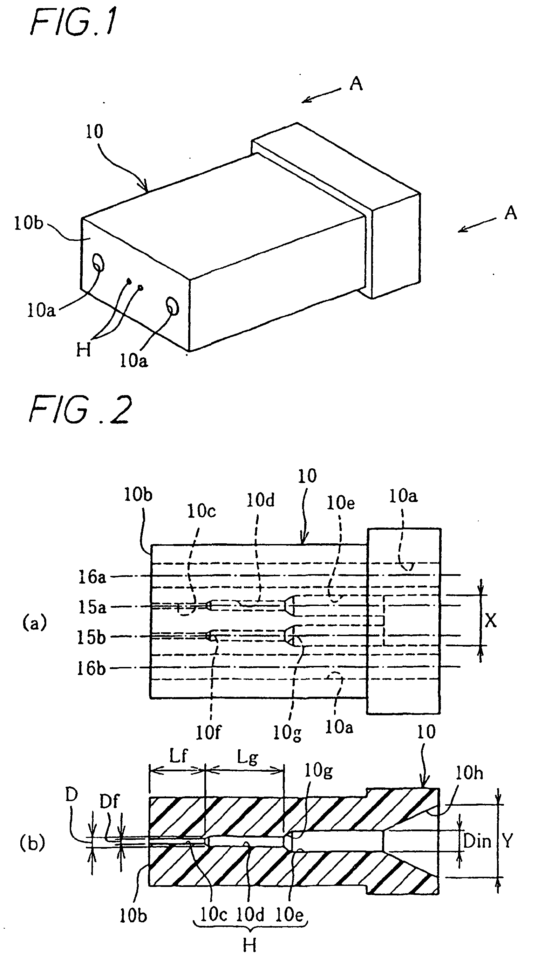

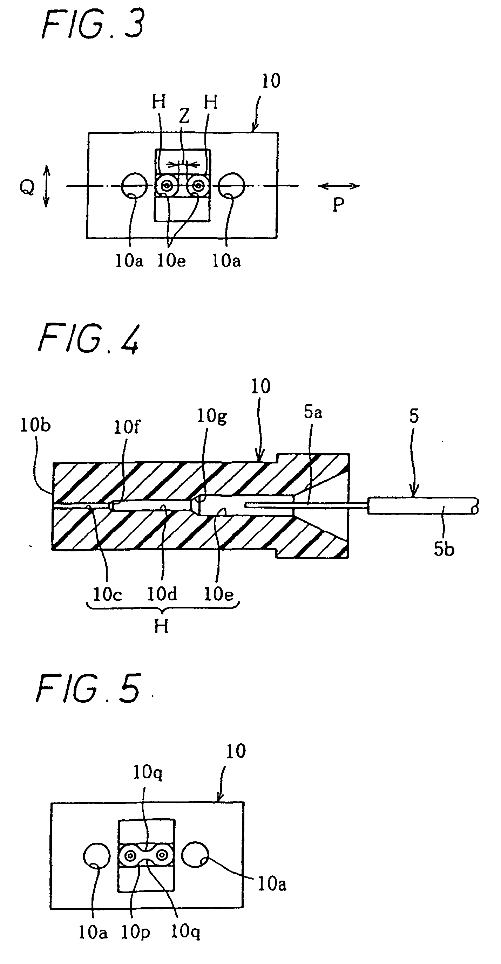

A ferrule 10 in accordance with a first embodiment, which is molded using a thermosetting resin such as epoxy resin or a thermoplastic resin such as liquid crystal polymer and polyphenylene sulfide (PPS), is, as shown in FIGS. 1 and 2, provided with two alignment pin holes into which alignment pins for positioning with respect to another ferrule of the same construction are inserted, and fiber fixed holes H which are formed at a predetermined interval between the two alignment pin holes 10a. One end of the fiber fixed hole H is open to a ferrule end face 10b, and the other end thereof is open to a bottom portion of an adhesive agent pool 10h formed on the rear end face, so that an optical fiber is fixed to the ferrule 10 with an adhesive agent after the optical fiber is inserted. The fiber fixed holes H are arranged so that the center axis lines 15a and 15b of the fiber fixed holes H and the center axis lines 16a and 16b of the alignment pin holes 10a form a same plane (see FIG. 3).

The ferrule in accordance with the present invention is molded using the aforesaid synthetic resin in other embodiments described later as well.

The fiber fixed hole H has a fiber hole 10c, a fiber guide hole 10d, and a fiber insertion hole 10e, these holes having the same hole center, and tapered portions 10f and 10g are provided between the fiber hole 10c and the fiber guide hole 10d and between the fiber guide hole 10d and the fiber insertion hole 10e, respectively.

The fiber fixed holes H are formed at a predetermined interval. Specifically, as shown in FIG. 3, a wall with a thickness Z is formed between the fiber insertion holes 10e of the fiber fixed holes H. Thereby, each optical fiber can be inserted surely into a predetermined fiber insertion hole. Also, since the fiber insertion holes having a substantially circular shape on the end face are formed separately, the aligning operation at the time of optical fiber insertion is especially excellent.

The fiber hole 10c is formed so as to have a diameter slightly larger than that of the fiber 5a, which is provided by removing a sheathed portion 5b from an inserted optical ribbon fiber 5 (see FIG. 4), and is open to a ferrule end face 10b. The fiber guide hole 10d, which has a diameter larger than that of the fiber hole 10c, guides, into the fiber hole 10c, the optical fiber inserted into the fiber insertion hole 10e from the rear part of the ferrule 1. The fiber insertion hole 10e, which has a diameter larger than that of the fiber guide hole 10d, guides the optical ribbon fiber into the ferrule 10. The tapered portion 10f, 10g guides the optical fiber inserted into the fiber insertion hole 10e into the fiber guide hole 10d and the fiber hole 10c smoothly without the optical fiber abutting on the boundary of the connected hole.

The opening of the adhesive agent pool 10h is formed so that the width (X in FIG. 2(a)) in the direction of arrangement of the fiber insertion holes 10e, that is, in the direction of arrangement of the sheathed portion of the inserted optical ribbon fiber (the direction of P in FIG. 3) is smaller than the width (Y in FIG. 2(a)) in the direction perpendicular to the direction of arrangement of the sheathed portion (the direction of Q in FIG. 3). The adhesive agent pool 10h allows an adhesive agent to be easily poured in each fiber fixed hole H, and also prevents the adhesive agent from flowing out of the ferrule 10 along the optical fiber after the optical fiber is inserted.

The fiber guide hole 10d of the ferrule 10 preferably has a greater length. This is because the presence of adhesive agent in some degree of quantity between the inside face of hole and the inserted fiber 5a (see FIG. 4) contributes to an increase in strength against a pulling-out force. However, the adhesive agent used for the ferrule 10 has a coefficient of linear expansion different from that of the synthetic resin composing the ferrule 10 in the heat cycle test specified in Section 8.2 of JIS C 5961 or in the wet heat test etc. specified in Section 8.4 of JIS C 5961. In addition, the adhesive agent has characteristics of high hygroscopic property, and easily involves air bubbles. For these reasons, the ferrule 10 easily produces variations in connection loss caused by the temperature variations in the application environment.

Therefore, in the ferrule in accordance with the present invention, the dimensional conditions of the fiber guide hole 10d should preferably be as described below in order that the condition of the strength against the pulling-out force of 19.6 N is satisfied and the variations in connection loss in the heat cycle test or the wet heat test are not larger than 0.2 dB.

Specifically, when a non-filler adhesive agent or an adhesive agent with an average filler particle diameter not larger than 10 $\mu$m and a maximum filler particle diameter not larger than 20 $\mu$m is used, taking the diameter of the fiber hole 10c as Df (mn), the diameter of the fiber insertion hole 10e as Din(mn), and the length of the fiber hole 10c as Lf(mm) as shown in FIG. 2(b), the diameter D(nm) and the length Lg(mm) of the fiber guide hole 10d should be set so that the relationship expressed by the following equations holds.

$$(Df + 0.06) < D < (Din - 0.2)$$

$$Lf \leq Lg \leq 2Lf$$

As an example, when a non-filler adhesive agent or an adhesive agent with an average filler particle diameter not larger than 10 $\mu$m and a maximum filler particle diameter not larger than 20 $\mu$m is used, it can be thought that the diameter of the fiber hole 10c, the diameter of the fiber insertion hole 10e, and the length of the fiber hole 10c are set so that Df = 0.126 (mm), Din = 0.65 (mm), and Lf = 1.6 (mm), respectively, the diameter and the length of the fiber guide hole 10d are set so that D = 0.25 (mm) and Lg = 2 (mm), respectively, and the pitch P of the two fiber holes 10c is set so that P = 0.75 (mm).

A gap between the inside face of the fiber guide hole 10d and the fiber 5a (see FIG. 4) is filled with the adhesive agent. When an adhesive agent containing fillers is used, this gap is preferably 0.01 mm or more larger than the maximum filler particle diameter.

The ferrule 10 constructed as described above is assembled into a multi-connector by inserting an optical fiber in a way as described below.

First, a proper quantity of a thermosetting adhesive agent is supplied from the adhesive agent pool 10h at the rear part of the ferrule 10, and is sucked from the fiber holes 10c that is open to the ferrule end face 10b. Thereby, the adhesive agent is packed in the whole of the fiber fixed holes H, that is, the fiber holes 10c, fiber guide holes 10d, and fiber insertion holes 10e of the ferrule 10.

Since the width Y of the adhesive agent pool in the direction perpendicular to the direction of arrangement of sheathed portion is larger than the width X thereof in the direction of arrangement of sheathed portion, the adhesive agent can be poured easily into the fiber fixed holes.

Next , as shown in FIG. 4 , the optical ribbon fiber 5, in which a sheathed portion 5b of a length corresponding to the length of the fiber hole 10c and fiber guide hole 10d is removed from the tip end side, and a fiber 5a is exposed, is inserted from the fiber insertion hole 10e at the rear part of the ferrule 10. Then, the adhesive agent is cured by heat in a state in which the tip end of the fiber 5a slightly projects from the ferrule end face 10b.

When the optical ribbon fiber 5 is inserted into the fiber fixed hole H, the end of the sheathed portion 5b comes into contact with the tapered portion 10g between the fiber guide hole 10d and the fiber insertion hole 10e, so that the optical ribbon fiber 5 stops temporarily. At this time, by reciprocating the optical ribbon fiber 5 slightly in the axial direction in the fiber fixed hole H several times, the quantity of the adhesive agent packed in the fiber guide hole 10d can be made constant. Also, by this operation, the adhesive agent can be intruded between the inside face of the fiber hole 10c and the fiber 5a.

Therefore, the ferrule 10 has the fiber fixed hole H into which the optical fiber can be inserted easily without breakage of the optical ribbon fiber 5 and which can provide a sufficient strength for bonding to the optical ribbon fiber 5, and can restrain variations in connection loss caused by the temperature variations.

Also, since the adhesive agent pool 10h is formed, even if a reverse flow of adhesive agent is produced in the fiber fixed hole by the insertion of optical fiber, the adhesive agent caused to flow out of the opening of the fiber insertion hole by this reverse flow stays in the adhesive agent pool 10h, and does not flow unnecessarily out of the ferrule 10.

Since the width Y of the adhesive agent pool 10h in the direction perpendicular to the direction of arrangement of sheathed portion is larger than the width X thereof in the direction of arrangement of sheathed portion as described above, a large adhesive agent pool can be formed between the alignment pin holes at a limited interval while the thickness between the alignment pin hole 10a and the adhesive agent pool 10h is maintained sufficiently in terms of strength, so that the above-described outflow from the ferrule 10 can be prevented surely.

When the ferrule 10 is assembled into a multi-connector by inserting the optical ribbon fiber 5 into the fiber fixed hole H, a part of the optical ribbon fiber 5 extending from the ferrule 10 is protected by a boot (not shown) inserted in the rear part of the ferrule 10.

The fiber insertion hole need not necessarily be formed separately. As shown in FIG. 5, the fiber insertion hole may be formed as a common fiber insertion hole 10p that introduces a plurality of sheathed portions, and convex portions (movement regulating means) 10q may be provided in the fiber insertion hole 10p to regulate the movement of sheathed portion in the direction of arrangement of sheathed portion. Since the convex portions 10q are formed, the optical fiber can be inserted surely in the predetermined fiber insertion hole as in the case where the fiber insertion hole is formed separately.

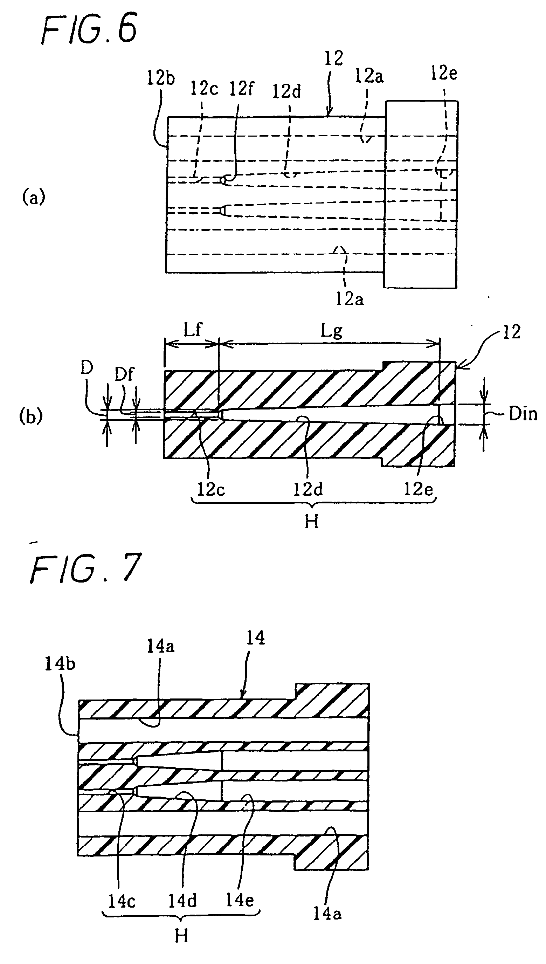

Next, a ferrule will be described with reference to FIGS. 6(a) and 6(b).

A ferrule 12 is provided with two alignment pin holes 12a for inserting alignment pins , and two independent fiber fixed holes H which are formed at a predetermined interval between the two alignment pin holes 12a. One end of the fiber fixed hole H is open to a ferrule end face 12b, and the other end thereof is open to the rear end face of ferrule. An optical fiber is inserted into and fixed to the fiber fixed hole H with an adhesive agent.

Each of the fiber fixed holes H has a fiber hole 12c, a fiber guide hole 12d, and a fiber insertion hole 12e, these holes having the same hole center. The fiber guide hole 12d is formed so that the diameter thereof decreases gradually from the side of the fiber insertion hole 12e toward the fiber hole 12c, and a tapered portion 12f is provided between the fiber guide hole 12d and the fiber hole 12c. Specifically, the fiber guide hole 12d and the fiber insertion hole 12e are formed into a continuous taper shape.

Thus, the ferrule 12 is formed into a taper shape such that the diameter of the fiber guide hole 12d decreases gradually from the side of the fiber insertion hole 12e toward the fiber hole 12c. It is preferable that the ferrule 12 be formed so that each of the fiber fixed holes H satisfies the same relational equation as that of the fiber fixed hole H of the first embodiment. Thereby, when the ferrule 12 is assembled into a multi-connector by inserting the optical ribbon fiber into the fiber fixed holes H, in addition to the effects of the ferrule 10, the optical ribbon fiber can be inserted more easily as compared with the ferrule 10, and the assembling efficiency is further increased. At this time, the diameter of the fiber guide hole 12d is an average diameter of (Df + Din)/2 (nm).

Also, a ferrule in accordance with the present invention, like a ferrule 14 shown in FIG. 7, may be provided with two alignment pin holes 14a for inserting alignment pins, and two independent fiber fixed holes H which are formed at a predetermined interval between the two alignment pin holes 14a. One end of fiber fixed hole H is open to a ferrule end face 14b, the other end thereof is open to the rear end face of ferrule. An optical fiber is inserted into and fixed to the fiber fixed hole H with an adhesive agent.

Each of the fiber fixed hole H has a fiber hole 14c, a fiber guide hole 14d, and a fiber insertion hole 14e, these holes having the same hole center. The fiber guide hole 14d is formed so that the diameter thereof decreases gradually from the side of the fiber insertion hole 14e toward the fiber hole 14c.

Therefore, it is preferable that the ferrule 14, like the ferrule 12, be provided with a tapered portion between the fiber hole 14c and the fiber guide hole 14d, and the diameter or the fiber hole 14c, the diameter of the fiber insertion hole 14e, the length of the fiber hole 14c, and the diameter and length of the fiber guide hole 14d satisfy the same relational equation as that of the fiber fixed hole H of the first embodiment. Thereby, when the ferrule 14 is assembled into a multi-connector by the inserting optical ribbon fiber into the fiber fixed holes H, in addition to the effects of the ferrule 10, the optical ribbon fiber can be inserted more easily as compared with the ferrule 10, and the assembling efficiency is further increased. At this time, the diameter of the fiber guide hole 14d is an average diameter of (Df + Din)/2 (nm).

**Explanation of Reference Numerals**

| | |
|---|---|
| 5 | optical ribbon fiber |
| 5a | fiber |
| 5b | sheathed portion |
| 10, 12 | ferrule |

| 10a, 12a | alignment pin hole |
| 10b, 12b | ferrule end face |
| 10c, 12c | fiber hole |
| 10d, 12d | fiber guide hole |
| 10e, 12e | fiber insertion hole |
| 10f, 12f | tapered portion |
| 10g | tapered portion |
| 10h | adhesive agent pool |
| 10q | convex portion |
| 14 | ferrule |
| 14a | alignment pin hole |
| 14b | ferrule end face |
| 14c | fiber hole |
| 14d | fiber guide hole |
| 14e | fiber insertion hole |
| H | fiber fixed hole |

**Claims**

1. A ferrule (10) provided with two alignment pin holes (10a) into which alignment pins for positioning with respect to a mating ferrule are inserted, and a plurality of fiber fixed holes (H), formed at predetermined locations along a transverse axis between said two alignment pin holes (10a), each for receiving an optical fiber (5), each of said fiber fixed holes (H) having at least a fiber guide hole portion (10d) for guiding the optical fiber (5), and a fiber hole portion (10c) connected with said fiber guide hole portion (10d) to accommodate the tip end of the optical fiber (5), a fiber insertion hole portion (10e) being connected with each fiber guide hole portion (10d) to house sheathed portion (5b) of the optical fiber (5) in said ferrule (10), and a connecting portion (10g) between each said fiber guide hole (10d) and said fiber insertion hole (10e) is formed in a taper shape, at least one fiber insertion hole portion (10e) having a pool (10h) for containing an adhesive agent formed at its rear opening for fixing the optical fiber (5), **characterized in that**
the width (Y) of the opening portion of said adhesive agent pool (10h) in the direction perpendicular to said transverse axis is larger than the width (X) of said opening portion in said transverse axis.

2. The ferrule according to claim 1, wherein one said fiber insertion hole portion is formed as a common fiber insertion hole (10p) for receiving sheathed portions (5b) of a plurality of fibers (5).

3. The ferrule according to claim 2, wherein said fiber insertion hole portion (10p) is provided with movement regulating means (10q) for preventing movement of said sheathed portions (5b) along said transverse axis.

4. The ferrule according to claim 3, wherein said movement regulating means comprises a convex portion (10q) extending into said fiber insertion hole (10p), and the width of said fiber insertion hole (10p) at said convex portion (10q) in a direction perpendicular to said transverse axis is smaller than the diameter of a sheathed portion (5b) of a fiber (5).

5. The ferrule according to any preceding claim, wherein said fiber guide hole portion (12d) and said fiber insertion hole portion (12e) are formed into a continuous taper shape.

6. The ferrule according to any preceding claim, wherein said fiber guide hole portion (12d) is formed so that the diameter thereof decreases gradually from the side of the fiber insertion hole (12e) towards the fiber hole (12c).

7. A method of inserting an optical fiber (5) in the ferrule (10) as claimed in any preceding claim, comprising the steps of:

supplying an adhesive agent from the adhesive agent pool (10h) into the fiber fixed holes (H), by sucking the said adhesive agent from said fiber holes (10c) which are open at an end face (10b) of the ferrule (10);
inserting a fiber (5a) exposed from a sheathed portion (5b) of an optical ribbon fiber (5) into said fiber hole (10c); and
curing the adhesive agent.

**Patentansprüche**

1. Faserhülse, die mit zwei Passstiftlöchern (10a), in die Passstifte zur Positionierung bezüglich einer Gegenfaserhülse eingesetzt werden, und mehreren Faserfixierlöchern (H) versehen ist, die an vorgegebenen Stellen entlang einer Querachse zwischen je zwei Passstiftlöchern (10a) zur Aufnahme einer optischen Faser (5) ausgebildet sind, wobei jedes der Faserfixierlöcher (H) mindestens einen Faserführungslochabschnitt (10d) zur Führung der optischen Faser (5) und einen mit dem Faserführungslochabschnitt (10d) verbundenen Faserlochabschnitt (10c) zur Aufnahme des Spitzenendes der optischen Faser (5), einen mit jedem Faserführungslochabschnitt (10d) verbundenen Fasereinstecklochabschnitt (10e) zur Aufnahme eines ummantelten Abschnitts (5b) der optischen Faser (5) in der Faserhülse (10) aufweist, wobei zwischen jedem Faserführungsloch (10d) und dem Fasereinsteckloch (10e) ein Verbindungsabschnitt (10g) verjüngt ausgebildet ist, wobei mindestens ein Fasereinstecklochabschnitt (10e) einen Napf (10h) zur Aufnahme eines Klebstoffs aufweist, der an seinem hinteren Ende zum Fixieren der optischen Faser (5) ausgebildet ist, **dadurch ge-**

**kennzeichnet, daß**

die Breite (Y) des Öffnungsabschnitts des Klebstoffnapfs (10h) in senkrechter Richtung zu der Querachse größer ist als die Breite (X) des Öffnungsabschnitts in Richtung der Querachse.

2. Faserhülse nach Anspruch 1, wobei ein Fasereinstecklochabschnitt als gemeinsames Fasereinsteckloch (10p) zur Aufnahme von ummantelten Abschnitten (5b) mehrerer Fasern (5) ausgebildet ist.

3. Faserhülse nach Anspruch 2, wobei der Fasereinstecklochabschnitt (10p) mit einer Bewegungsreguliereinrichtung (10q) versehen ist, um eine Bewegung der ummantelten Abschnitte (5b) entlang der Querachse zu verhindern.

4. Faserhülse nach Anspruch 3, wobei die Bewegungsreguliereinrichtung einen konvexen Abschnitt (10q) aufweist, der sich in das Fasereinsteckloch (10p) erstreckt, und wobei die Breite des Fasereinstecklochs (10p) an dem konvexen Abschnitt (10q) in einer zur Querachse senkrechten Richtung kleiner ist als der Durchmesser eines ummantelten Abschnitts (5b) einer Faser (5).

5. Faserhülse nach einem der vorstehenden Ansprüche, wobei der Faserführungslochabschnitt (12d) und der Fasereinstecklochabschnitt (12e) zu einer kontinuierlichen verjüngten Form geformt sind.

6. Faserhülse nach einem der vorstehenden Ansprüche, wobei der Faserführungslochabschnitt (12d) so geformt ist, daß sein Durchmesser von der Seite des Fasereinstecklochs (12e) zum Faserloch (12c) hin allmählich abnimmt.

7. Verfahren zum Einsetzen einer optischen Faser (5) in eine Faserhülse (10) nach einem der vorstehenden Ansprüche, mit den folgenden Schritten:

Zuführen eines Klebstoffs aus dem Klebstoffnapf (10h) in die Faserfixierlöcher (H) durch Ansaugen des Klebstoffs von den Faserlöchern (10c) aus, die an einer Stirnfläche (10b) der Faserhülse (10) offen sind;
Einsetzen einer von einem ummantelten Abschnitt (5b) eines Lichtleiterbands (5) freigelegten Faser (5a) in das Faserloch (10c); und
Aushärten des Klebstoffs.

**Revendications**

1. Ferrule (10) comportant deux trous à goupilles d'alignement (10a), dans lesquels sont insérées des goupilles d'alignement en vue d'un positionnement par rapport à une ferrule complémentaire, et plusieurs trous fixes à fibres (H), formés au niveau d'emplacements prédéterminés le long d'un axe transversal entre lesdits deux trous à goupilles d'alignement (10a), chacun étant destiné à recevoir une fibre optique (5), chacun desdits trous fixes à fibres (H) comportant au moins une partie de trou de guidage de la fibre (10d) pour guider la fibre optique (5), et une partie de trou à fibres (10c) connectée à ladite partie de trou de guidage de la fibre (10d) pour recevoir l'extrémité de pointe de la fibre optique (5), une partie de trou d'insertion de la fibre (10e) connectée à chaque partie de trou de guidage de la fibre (10d) pour recevoir une partie gainée (5b) de la fibre optique (5) dans ladite ferrule (10), et une partie de connexion (10g) entre chaque dit trou de guidage de la fibre (10d) et ledit trou d'insertion de la fibre (10e) formé dans une forme effilée, au moins une partie du trou d'insertion de la fibre (10e) comportant un bassin (10h) destiné à contenir un agent adhésif formé au niveau de son ouverture arrière pour fixer la fibre optique (5), **caractérisée en ce que**
la largeur (Y) de la partie d'ouverture dudit bassin contenant l'agent adhésif (10h), dans la direction perpendiculaire audit axe transversal, est supérieure à la largeur (X) de ladite partie d'ouverture dans ledit axe transversal.

2. Ferrule selon la revendication 1, dans laquelle une dite partie de trou d'insertion de la fibre constitue un trou d'insertion commun de la fibre (10p) pour recevoir les parties gainées (5b) de plusieurs fibres (5).

3. Ferrule selon la revendication 2, dans laquelle ladite partie de trou d'insertion de la fibre (10p) comporte un moyen de régulation du déplacement (10q), destiné à empêcher le déplacement desdites parties gainées (5b) le long dudit axe transversal.

4. Ferrule selon la revendication 3, dans laquelle ledit moyen de régulation du déplacement comprend une partie convexe (10q), s'étendant dans ledit trou d'insertion de la fibre (10p), la largeur dudit trou d'insertion de la fibre (10p) au niveau de ladite partie convexe (10q), dans une direction perpendiculaire audit axe transversale, étant inférieure au diamètre d'une partie gainée (5b) d'une fibre (5).

5. Ferrule selon l'une quelconque des revendications précédentes, dans laquelle ladite partie de trou de guidage de la fibre (12d) et ladite partie de trou d'insertion de la fibre (12e) ont une forme effilée continue.

6. Ferrule selon l'une quelconque des revendications précédentes, dans laquelle ladite partie du trou de guidage de la fibre (12d) est formée de sorte que son diamètre est réduit progressivement du côté du trou d'insertion de la fibre (12e) vers le trou à fibres

**EP 1 312 954 B1**

(12c).

7. Procédé d'insertion d'une fibre optique (5) dans la ferrule (10) selon l'une quelconque des revendications précédentes, comprenant les étapes ci-dessous:

> introduction d'un agent adhésif contenu dans le bassin de l'agent adhésif (10h) dans les trous fixes à fibres (H), par
>
> aspiration dudit agent adhésif à partir desdits trous à fibres (10c), ouverts au niveau d'une face d'extrémité (10b) de la ferrule (10);
> insertion d'une fibre (5a) exposée à partir d'une partie gainée (5b) d'une fibre optique en ruban (5) dans ledit trou à fibres (10c); et
> durcissement de l'agent adhésif.

## FIG.1

## FIG.2

(a)

(b)

*FIG.3*

*FIG.4*

*FIG.5*

## FIG.6

(a)

(b)

## FIG.7

# FIG. 8

# FIG. 9